# EUROPEAN PATENT APPLICATION

(11) **EP 4 517 863 A1**
(43) Date of publication of application: **05.03.2025**
(21) Application number: 24192716.9
(22) Date of filing: 02.08.2024
(51) Int. Cl.: H01M 4/133, H01M 4/36, H01M 4/587, H01M 10/0525, H01M 10/0569, H01M 4/02

(54) **ELECTROCHEMICAL DEVICE AND ELECTRONIC DEVICE**

(30) Priority: 04.08.2023 CN 202310979692
(71) Applicant: Ningde Amperex Technology Ltd., Ningde City, Fujian 352100 (CN)
(72) Inventor: TAN, Fujin, Ningde City, Fujian Province, People s Republic of China, 352100 (CN); ZHENG, Zigui, Ningde City, Fujian Province, People s Republic of China, 352100 (CN); SHAO, Wenlong, Ningde City, Fujian Province, People s Republic of China, 352100 (CN); XIE, Yuansen, Ningde City, Fujian Province, People s Republic of China, 352100 (CN)
(74) Representative: Icosa

(57) **Abstract**

An electrochemical device includes a negative electrode plate and an electrolyte solution. The negative electrode plate includes a negative current collector and a negative active material layer, and the negative active material layer is located on the negative current collector. The negative active material layer includes a negative active material, the negative active material includes hard carbon and graphite, and a mass percent of the hard carbon in the negative active material is w. The electrolyte solution includes at least one of ethyl propionate or propyl propionate. A mass percent of the ethyl propionate and/or propyl propionate in the electrolyte solution is v, 5 ≤v/w ≤ 21. The synergistic effect between the hard carbon and the electrolyte solvent enables the electrochemical device to meet requirements of both a high energy density and cost-effectiveness, and improves the low-temperature performance and C-rate performance of the electrochemical device.

## Description

### TECHNICAL FIELD

This application relates to the field of electrochemical energy storage, and in particular, to an electrochemical device and an electronic device.

### BACKGROUND

With the growing global demand for energy, the development and utilization of new clean energy sources are of vital importance. Electrochemical devices (such as a lithium-ion battery) are widely used in the fields of mobile phones, unmanned aerial vehicles, energy storage, and electric vehicles by virtue of a high specific energy, a long lifespan, no memory effect, and environment-friendliness. At the same time, the application of lithium-ion batteries in important fields such as aerospace and polar region exploration has also attracted extensive attention in recent years. Such special application scenarios require excellent low-temperature performance of the lithium-ion batteries. However, when used in a low-temperature environment, the lithium-ion batteries are prone to problems such as severe capacity fading and low C-rate performance. Therefore, it is necessary to further improve the low-temperature performance and C-rate performance of the lithium-ion batteries to meet the current application needs of batteries in important fields.

### SUMMARY

An objective of this application is to provide an electrochemical device resistant to low temperature and exhibiting high C-rate performance to overcome some disadvantages in the prior art. Through a synergistic effect between hard carbon and an electrolyte solvent, this application enables the electrochemical device to meet requirements of both a high energy density and cost-effectiveness, and improves the low-temperature performance and C-rate performance of the electrochemical device, thereby greatly widening the low-temperature window, satisfying some low-temperature application scenarios, and in turn, improving the electrochemical performance of the electrochemical device.

To achieve the above objective, this application puts forward the following technical solutions:
This application provides an electrochemical device. The electrochemical device includes a negative electrode plate and an electrolyte solution. The negative electrode plate includes a negative current collector and a negative active material layer, and the negative active material layer is located on the negative current collector. The negative active material layer includes a negative active material, the negative active material includes hard carbon and graphite, and a mass percent of the hard carbon in the negative active material is w. The electrolyte solution includes at least one of ethyl propionate or propyl propionate. A mass percent of the ethyl propionate and/or propyl propionate in the electrolyte solution is v, 5 ≤v/w ≤ 21. An amount of hard carbon is introduced into the negative active material on the basis of the graphite negative active material. Because the isotropy of hard carbon is much higher than that of graphite, the introduced hard carbon can reduce the resistivity of the negative electrode plate, reduce the OI value of the negative electrode plate, improve the ion diffusion coefficient, and effectively reduce the internal resistance of the electrochemical device. Ethyl propionate and propyl propionate are common carboxylate ester electrolyte solvents, and are of low viscosity and high fluidity at low temperature, thereby facilitating transmission of Li⁺ ions. By controlling the ratio of the mass percent w of the hard carbon in the negative active material to the mass percent v of the ethyl propionate and/or propyl propionate in the electrolyte solution, denoted as v/w, to fall within a specified range, through the synergistic effect between the hard carbon and the electrolyte solvent, this application achieves a high energy density and cost-effectiveness of the electrochemical device, and achieves relatively high C-rate performance and low-temperature performance of the electrochemical device.

In some embodiments, 8 ≤ v/w ≤ 15. In this case, the discharge capacity retention rate of the electrochemical device cycled at -20 °C and a current of 1C is 77% or above, the discharge capacity retention rate of the electrochemical device cycled at 25 °C and a current of 5C is 92% or above, and the number of cycles accumulated with desirable cycle performance of the electrochemical device cycled at 0 °C and a current of 1C is 420 or above.

In some embodiments, 1% ≤ w ≤ 10%. The compacted density of hard carbon is much lower than that of graphite. If the mass percent of the added hard carbon is overly high, the compacted density of the negative electrode plate will be affected, thereby possibly causing damage to graphite particles and the negative current collector during the preparation and processing of the negative electrode plate, or failing to achieve the target compacted density of the negative electrode plate. Therefore, this application controls the mass percent w of the hard carbon in the negative active material to fall within a specified range, thereby further improving the electrochemical performance while achieving a high energy density of the electrochemical device.

In some embodiments, 10% ≤ v ≤ 70%. By controlling the mass percent v of the ethyl propionate and/or propyl propionate in the electrolyte solution to fall within the specified range, through the synergistic effect between the hard carbon and the electrolyte solvent, this application achieves a high energy density and cost-effectiveness of the electrochemical device, and achieves even higher C-rate performance and low-temperature performance of the electrochemical device.

In some embodiments, a ratio of a mass percent of hydrogen in the hard carbon to a mass percent of carbon in the hard carbon is n, and a ratio of n to an orientation index OI value of the graphite, denoted as x, satisfies: 0.0025 ≤ x ≤ 0.04. By controlling the ratio x of n to the OI value of graphite to fall within the specified range, this application improves the cycle performance of the electrochemical device. In some embodiments, 0.02 ≤ n ≤ 0.08. The ratio n of the mass percent of hydrogen to the mass percent of carbon in the hard carbon is related to the calcination temperature of the hard carbon. The higher the calcination temperature, the lower the value of n, and therefore, the fewer the graphite crystallites in the hard carbon, and the higher the isotropy of the hard carbon. In some embodiments, the OI value of the graphite is 1 to 7. In some embodiments, the OI value of the negative electrode plate is 10 to 30. Graphite takes a dominant position in the negative active material, and the OI value of the graphite greatly affects the diffusion rate of lithium ions. By controlling the ratio x of n to the OI value of graphite powder to fall within the specified range, this application further improves the electrochemical performance of the electrochemical device.

In some embodiments, a porosity of the negative electrode plate is p, 0.26 ≤ p/(1 - w) ≤ 0.35. By controlling p/(1-w) to fall within the specified range, this application improves the cycle performance of the electrochemical device, and achieves a balance between the porosity of the negative electrode plate and the mass percent of the hard carbon so as not to impair the transmission of lithium ions. In some embodiments, the porosity p of the negative electrode plate is 25% to 35%. When the hard carbon of a low compacted density is compounded with graphite, the porosity of the negative electrode plate may be reduced. By controlling the porosity p of the negative electrode plate and p/(1-w) to fall within the specified ranges, this application achieves a balance between the porosity of the negative electrode plate and the mass percent of the hard carbon so as not to impair the transmission of lithium ions, thereby further improving the C-rate performance and low-temperature performance of the electrochemical device.

In some embodiments, the compacted density of the negative electrode plate is 1.65 to 1.80 g/cm³.

In some embodiments, the graphite includes at least one of natural graphite or artificial graphite.

In some embodiments, the negative electrode plate satisfies: ρ1/ρ2 ≤ 350, where ρ1 is the resistivity of the negative electrode plate and is less than or equal to 2.5 Ω·cm, and is tested under the following conditions: the mass percent of the negative active material in the negative active material layer is 97.6%, the mass percent of the binder is 1.2%, the test pressure of the resistivity is 25.5 MPa, the resistivity is in units of Ω·cm and is tested by a two-point probe method; and ρ2 is a volume resistivity of the negative active material powder under a pressure of 25.0 MPa in units of Ω·cm, and is less than or equal to 0.008 Q cm and tested by a four-probe method.

In some embodiments, a specific surface area (BET) of graphite is 0.1 m²/g to 6 m²/g, and the Dᵥ₅₀ of graphite is 5 µm to 20 µm.

In some embodiments, the BET of hard carbon is 2 m²/g to 15 m²/g, and the Dᵥ₅₀ of the hard carbon is 1.8 µm to 11.6 µm.

This application achieves at least the following beneficial effects:

Some embodiments of this application provide an electrochemical device resistant to low temperature and exhibiting high C-rate performance. The synergistic effect between the hard carbon and the electrolyte solvent enables the electrochemical device to meet requirements of both a high energy density and cost-effectiveness, and improves the low-temperature performance and C-rate performance of the electrochemical device. According to some embodiments of this application, the electrochemical device exhibits excellent electrochemical performance: the discharge capacity retention rate of the electrochemical device cycled at -20 °C and a current of 1C is 75% or above, the discharge capacity retention rate of the electrochemical device cycled at 25 °C and a current of 5C is 88% or above, and the number of cycles accumulated with the capacity retention rate fading to 80% as cycled at 0 °C and a current of 1C is 350 or above.

### BRIEF DESCRIPTION OF DRAWING

To describe the technical solutions in some embodiments of this application more clearly, the following outlines the drawings to be used in the description of the embodiments. Evidently, the drawings outlined below merely illustrate some embodiments of this application, and a person skilled in the art may derive other drawings based on the listed drawings.

Figure shows a cross-sectional scanning electron microscopy (SEM) image of the negative electrode plate sectioned along a thickness direction and prepared according to Embodiment 1-1 of this application.

### DETAILED DESCRIPTION

The following embodiments enable a person skilled in the art to understand this application more comprehensively, but without limiting this application in any way.

Some embodiments of this application provide an electrochemical device. The electrochemical device includes a negative electrode plate and an electrolyte solution. In some embodiments, the negative electrode plate includes a negative current collector and a negative active material layer, and the negative active material layer is located on the negative current collector. In some embodiments, the negative active material layer may exist on one side of the negative current collector, or the negative active material layer may exist on both sides of the negative current collector.

In some embodiments, the negative active material layer includes a negative active material, the negative active material includes hard carbon and graphite. In some embodiments, a mass percent of the hard carbon in the negative active material is w. In some embodiments, the electrolyte solution includes at least one of ethyl propionate or propyl propionate. A mass percent of the ethyl propionate and/or propyl propionate in the electrolyte solution is v, 5 ≤v/w ≤ 21. An amount of hard carbon is introduced into the negative active material on the basis of the graphite negative active material. Because the isotropy of hard carbon is much higher than that of graphite, the introduced hard carbon can reduce the resistivity of the negative electrode plate, reduce the OI value of the negative electrode plate, improve the ion diffusion coefficient, and effectively reduce the internal resistance of the electrochemical device. Ethyl propionate and propyl propionate are common carboxylate ester electrolyte solvents, and are of low viscosity and high fluidity at low temperature, thereby facilitating transmission of Li⁺ ions. By controlling the ratio of the mass percent w of the hard carbon in the negative active material to the mass percent v of the ethyl propionate and/or propyl propionate in the electrolyte solution, denoted as v/w, to fall within a specified range, through the synergistic effect between the hard carbon and the electrolyte solvent, this application achieves a high energy density and cost-effectiveness of the electrochemical device, and achieves relatively high C-rate performance and low-temperature performance of the electrochemical device. In some embodiments, the value of the v/w ratio may be 5, 7, 8, 11, 13, 16, 18, 20, 21, or a value falling within a range formed by any two thereof.

In some embodiments, 8 ≤ v/w ≤ 15. In this case, the discharge capacity retention rate of the electrochemical device cycled at -20 °C and a current of 1C is 77% or above, the discharge capacity retention rate of the electrochemical device cycled at 25 °C and a current of 5C is 92% or above, and the number of cycles accumulated with the capacity retention rate fading to 80% as cycled at 0 °C and a current of 1C is 420 or above.

In some embodiments, 1% ≤ w ≤ 10%. In some embodiments, w may be 1, 3, 5, 6, 7, 8, 10, or a value falling within a range formed by any two thereof. The compacted density of hard carbon is much lower than that of graphite. If the mass percent of the added hard carbon is overly high, the compacted density of the negative electrode plate will be affected, thereby possibly causing damage to graphite particles and the negative current collector during the preparation and processing of the negative electrode plate, or failing to achieve the target compacted density of the negative electrode plate. If the mass percent of the hard carbon is overly small, the effect of the hard carbon in improving the electrochemical performance of the electrochemical device is relatively limited. Therefore, this application controls the mass percent w of the hard carbon in the negative active material to fall within a specified range, thereby further improving the electrochemical performance while achieving a high energy density of the electrochemical device.

In some embodiments, 10% ≤ v ≤ 70%. In some embodiments, v may be 10%, 15%, 20%, 30%, 40%, 50%, 60%, 70%, or a value falling within a range formed by any two thereof. By controlling the mass percent v of the ethyl propionate and/or propyl propionate in the electrolyte solution to fall within the specified range, through the synergistic effect between the hard carbon and the electrolyte solvent, this application achieves a high energy density and cost-effectiveness of the electrochemical device, and achieves even higher C-rate performance and low-temperature performance of the electrochemical device.

In some embodiments, a ratio of a mass percent of hydrogen in the hard carbon to a mass percent of carbon in the hard carbon is n, and a ratio of n to an orientation index OI value of the graphite, denoted as x, satisfies: 0.0025 ≤ x ≤ 0.04. In some embodiments, x may be 0.0025, 0.005, 0.007, 0.009, 0.01, 0.015, 0.02, 0.025, 0.03, 0.035, 0.04, or a value falling within a range formed by any two thereof. The OI value is equal to a ratio of C₀₀₄ to C₁₁₀, where C₀₀₄ represents a peak area of the 004 characteristic diffraction peak, and C₁₁₀ represents a peak area of the 110 characteristic diffraction peak. By controlling the ratio x of n to the OI value of graphite to fall within the specified range, this application improves the cycle performance of the electrochemical device. In some embodiments, 0.02 ≤ n ≤ 0.08. The ratio n of the mass percent of hydrogen to the mass percent of carbon in the hard carbon is related to the calcination temperature of the hard carbon. The higher the calcination temperature, the lower the value of n, and therefore, the fewer the graphite crystallites in the hard carbon, and the higher the isotropy of the hard carbon. In some embodiments, the OI value of the graphite is 1 to 7. In some embodiments, the OI value of the graphite may be 1, 2.3, 3, 4.5, 5.6, 6, 7, or a value falling within a range formed by any two thereof. In some embodiments, the OI value of the negative electrode plate is 10 to 30. In some embodiments, the OI value of the negative electrode plate may be 10, 12, 14, 17, 21, 24, 26, 30, or a value falling within a range formed by any two thereof. Graphite takes a dominant position in the negative active material, and the OI value of the graphite greatly affects the diffusion rate of lithium ions. By controlling the ratio x of n to the OI value of graphite powder to fall within the specified range, this application further improves the electrochemical performance of the electrochemical device.

In some embodiments, a porosity of the negative electrode plate is p, 0.26 ≤ p/(1 - w) ≤ 0.35. In some embodiments, p/(1-w) may be 0.26, 0.27, 0.29, 0.31, 0.33, 0.35, or a value falling within a range formed by any two thereof. By controlling p/(1-w) to fall within the specified range, this application improves the cycle performance of the electrochemical device, and achieves a balance between the porosity of the negative electrode plate and the mass percent of the hard carbon so as not to impair the transmission of lithium ions. In some embodiments, the porosity p of the negative electrode plate is 25% to 35%. In some embodiments, p may be 25%, 27%, 29%, 31%, 33%, 35%, or a value falling within a range formed by any two thereof. When the hard carbon of a low compacted density is compounded with graphite, the porosity of the negative electrode plate may be reduced. By controlling the porosity p of the negative electrode plate and p/(1-w) to fall within the specified ranges, this application achieves a balance between the porosity of the negative electrode plate and the mass percent of the hard carbon so as not to impair the transmission of lithium ions, thereby further improving the cycle performance, low-temperature performance, and C-rate performance of the electrochemical device.

In some embodiments, the compacted density of the negative electrode plate is 1.65 to 1.80 g/cm³. In some embodiments, the compacted density of the negative electrode plate may be 1.65 g/cm³, 1.68 g/cm³, 1.70 g/cm³, 1.72 g/cm³, 1.75 g/cm³, 1.80 g/cm³, or a value falling within a range formed by any two thereof.

In some embodiments, the graphite includes at least one of natural graphite or artificial graphite.

In some embodiments, the negative electrode plate satisfies: ρ1/ρ2 ≤ 350, where ρ1 is the resistivity of the negative electrode plate and is less than or equal to 2.5 Ω·cm, and is tested under the following conditions: the mass percent of the negative active material in the negative active material layer is 97.6%, the mass percent of the binder is 1.2%, the test pressure of the resistivity is 25.5 MPa, the resistivity is in units of Ω·cm and is tested by a two-point probe method; and ρ2 is a volume resistivity of the negative active material powder under a pressure of 25.0 MPa in units of Ω·cm, and is less than or equal to 0.008 Ω·cm and tested by a four-probe method.

In some embodiments, a specific surface area (BET) of graphite is 0.1 m²/g to 6 m²/g, and the Dᵥ₅₀ of graphite is 5 µm to 20 µm. In some embodiments, the BET of the graphite may be 0.1 m²/g, 0.9 m²/g, 1.3 m²/g, 1.5 m²/g, 2.1 m²/g, 3.3 m²/g, 4.2 m²/g, 5.1 m²/g, 6 m²/g, or a value falling within a range formed by any two thereof. In some embodiments, the Dᵥ₅₀ of the graphite may be 5 µm, 7 µm, 9 µm, 11 µm, 13 µm, 15 µm, 17 µm, 19 µm, 20 µm, or a value falling within a range formed by any two thereof. In some embodiments, the BET of hard carbon is 2 m²/g to 15 m²/g, and the Dᵥ₅₀ of the hard carbon is 1.8 µm to 11.6 µm. In some embodiments, the BET of the hard carbon may be 2 m²/g, 4 m²/g, 6 m²/g, 8 m²/g, 11 m²/g, 13 m²/g, 15 m²/g, or a value falling within a range formed by any two thereof. In some embodiments, the Dᵥ₅₀ of the graphite may be 1.8 µm, 2.5 µm, 4.5 µm, 5.5 µm, 7 µm, 8 µm, 9 µm, 10 µm, 11.6 µm, or a value falling within a range formed by any two thereof.

Natural graphite means graphite produced naturally as an ore. Artificial graphite means graphite made by artificial means and graphite approximating to the intact crystals of graphite. This type of artificial graphite is obtained by calcining and graphitizing a raw material such as pitch, tar, and coke, where the raw material is derived from residues of coal dry distillation, crude oil distillation, or the like. The graphitic material used as a core material is not particularly limited herein as long as the material is a common graphitic material applicable to a negative electrode of a lithium-ion battery. In an embodiment, one of the graphitic materials may be used alone, or two or more thereof may be used in combination.

In some embodiments, the negative current collector may be at least one of a copper foil, a nickel foil, a stainless steel foil, a titanium foil, foamed nickel, foamed copper, or a conductive-metal-clad polymer substrate.

In some embodiments, the negative active material layer may further include a binder. The binder in the negative active material layer may include at least one of: polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly (1,1-difluoroethylene), polyethylene, polypropylene, styrene-butadiene rubber, acrylic styrene-butadiene rubber, epoxy resin, or nylon.

In some embodiments, the negative active material layer may further include a conductive agent. The conductive agent in the negative active material layer may include at least one of a carbon-based material, a metal-based material, a conductive polymer, or a mixture thereof. In some embodiments, the carbon-based material may include at least one of carbon black, acetylene black, Ketjen black, or carbon fibers. In some embodiments, the metal-based material may include at least one of metal powder, metal fibers, copper, nickel, aluminum, or silver. In some embodiments, the conductive polymer may include a polyphenylene derivative.

In some embodiments, a mass ratio between the negative active material, the binder, and the conductive agent in the negative active material layer may be (90 to 98): (1 to 5): (1 to 5). Understandably, the mixing ratio between the constituents in the negative active material layer is merely an example, and may be any other appropriate mass ratio instead. The negative electrode plate of this application may be prepared by a method known in the art. A typical method for preparing a negative electrode plate is: mixing a negative active material, optionally a conductive agent (for example, carbon black and other carbon materials, and metal particles), a binder (such as styrene-butadiene rubber), other optional additives, and other materials, dispersing the mixture in a solvent (such as deionized water), stirring well to form a slurry, and then coating a negative current collector with the slurry evenly, and drying and cold-pressing the coated current collector to obtain a negative electrode plate containing a negative active material layer. Materials such as a metal foil or porous metal sheet may be used as a negative current collector.

In some embodiments, the electrochemical device may further include a positive electrode plate and a separator. The separator is disposed between the positive electrode plate and the negative electrode plate to serve a separation function.

In some embodiments, the positive electrode plate includes a positive current collector and a positive active material layer, and the positive active material layer is located on one side or both sides of the positive current collector. In some embodiments, the positive current collector may be an aluminum foil, or may be another positive current collector commonly used in this field. In some embodiments, the thickness of the positive current collector may be 5 µm to 30 µm.

In some embodiments, the positive active material layer may include a positive active material, a conductive agent, and a binder. In some embodiments, the positive active material may include at least one of lithium cobalt oxide, lithium nickel cobalt manganese oxide, lithium nickel cobalt aluminum oxide, lithium manganese oxide, lithium manganese iron phosphate, lithium vanadium phosphate, lithium vanadyl phosphate, lithium iron phosphate, lithium titanium oxide, or a lithium-rich manganesebased material. In some embodiments, the conductive agent in the positive active material layer may include at least one of conductive carbon black, flake graphite, graphene, or carbon nanotubes. In some embodiments, the binder in the positive active material layer may include at least one of polyvinylidene difluoride, poly(vinylidene fluoride-co-hexafluoropropylene), poly(styrene-co-acrylate), poly(styrene-co-butadiene), polyamide, polyacrylonitrile, polyacrylic ester, polyacrylic acid, sodium polyacrylate, sodium carboxymethyl cellulose, polyvinyl acetate, polyvinylpyrrolidone, polyvinyl ether, polymethyl methacrylate, polytetrafluoroethylene, or polyhexafluoropropylene. In some embodiments, a mass ratio of the positive active material, the conductive agent, and the binder in the positive active material layer is (90 to 99): (0.5 to 5): (0.5 to 5), but this is merely an example, and any other appropriate mass ratio may apply.

In some embodiments, the separator includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. Especially, the polyethylene and the polypropylene are highly effective in preventing short circuits, and can improve stability of the battery through a turn-off effect. In some embodiments, a thickness of the separator falls within a range of approximately 3 µm to 20 µm.

In some embodiments, a surface of the separator may further include a porous layer. The porous layer is disposed on at least one surface of the separator. The porous layer includes inorganic particles and a binder. The inorganic particles are at least one selected from aluminum oxide (Al₂O₃), silicon oxide (SiO₂), magnesium oxide (MgO), titanium oxide (TiO₂), hafnium dioxide (HfO₂), tin oxide (SnO₂), ceria (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide, and barium sulfate. In some embodiments, a diameter of a pore of the separator is within a range of approximately 0.01 µm to 1 µm. The binder in the porous layer is at least one selected from polyvinylidene difluoride, poly(vinylidene difluoride-co-hexafluoropropylene), polyamide, polyacrylonitrile, polyacrylic ester, polyacrylic acid, sodium polyacrylate, sodium carboxymethyl cellulose, polyvinylpyrrolidone, polyvinyl ether, polymethyl methacrylate, polytetrafluoroethylene, and polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, the electrochemical device includes, but is not limited to, a lithium-ion battery. In some embodiments, the electrolyte solution further includes at least one of fluoroether, fluoroethylene carbonate, or ether nitrile. In some embodiments, the electrolyte solution further includes a lithium salt. The lithium salt includes lithium bis(fluorosulfonyl)imide and lithium hexafluorophosphate. The concentration of the lithium salt is 1 mol/L to 2 mol/L. In some embodiments, the electrolyte solution may further include a nonaqueous solvent. The nonaqueous solvent may be a carbonate ester compound, a carboxylate ester compound, an ether compound, another organic solvent, or any combination thereof.

The carbonate ester compound may be a chain carbonate ester compound, a cyclic carbonate ester compound, a fluorocarbonate ester compound, or any combination thereof.

Examples of the chain carbonate ester compound are diethyl carbonate (DEC), dimethyl carbonate (DMC), dipropyl carbonate (DPC), methyl propyl carbonate (MPC), ethylene propyl carbonate (EPC), ethyl methyl carbonate (EMC), or any combination thereof. Examples of the cyclic carbonate ester compound are ethylene carbonate (EC), propylene carbonate (PC), butylene carbonate (BC), vinyl ethylene carbonate (VEC), or any combination thereof. Examples of the fluorocarbonate ester compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof.

Examples of the carboxylate compound are methyl acetate, ethyl acetate, n-propyl acetate, tert-butyl acetate, methyl propionate, γ-butyrolactone, decanolactone, valerolactone, mevalonolactone, caprolactone, methyl formate, or any combination thereof.

Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof.

Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or any combination thereof.

An embodiment of this application further provides an electronic device containing the electrochemical device. The electronic device according to this embodiment of this application is not particularly limited, and may be any electronic device known in the prior art. In some embodiments, the electronic device may include, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, unmanned aerial vehicle, lighting appliance, toy, game console, watch, electric tool, flashlight, camera, large household battery, lithium-ion capacitor, or the like.

Some specific embodiments and comparative embodiments are enumerated below to give a clearer description of this application, using a lithium-ion battery as an example. The following embodiments are more detailed descriptions of the subjectmatter disclosed herein. The embodiments are merely intended as illustrative descriptions because, evidently, a person skilled in the art may make various modifications and changes to such embodiments without departing from what is disclosed herein. Unless otherwise specified, all fractions, percentages, and ratios mentioned in the following embodiments are values by mass. All reagents used in the embodiments are commercially available or can be synthesized according to conventional methods, and can be directly put into use without a need of further processing. All the instruments used in the embodiments are commercially available.

### Embodiment 1-1

**Preparing a negative electrode plate:** The negative active material includes natural graphite particles with a Dᵥ₅₀ of 10.3 µm and hard carbon particles with a Dᵥ₅₀ of 3.5 µm. The OI value, compacted density, and BET of the natural graphite are 4.2, 1.79 g/cm³, and 3.4 m²/g, respectively. The ratio of the mass percent of hydrogen to the mass percent of carbon in the hard carbon is n, and n is 0.0284. The BET of the hard carbon is 4.7 m²/g.

Mixing the natural graphite with the hard carbon at a mass ratio of 99: 1, and using the mixture as a negative active material. Mixing well the negative active material, styrene butadiene rubber (SBR), and sodium carboxymethyl cellulose (CMC) at a mass ratio of 97: 2: 1 in an appropriate amount of deionized water to form a homogeneous negative electrode slurry in which the solid content is 40 wt%. Applying the slurry onto a 6 µm-thick negative current collector copper foil, drying the slurry at 85 °C, performing cold pressing, and controlling the pressure during the cold-pressing so as to control the compacted density of the negative electrode plate to be 1.78 g/cm³ and control the thickness of the negative active material layer to be 110 µm, and then performing cutting and slitting, and drying the electrode plate in a 120 °C vacuum environment for 12 hours to obtain a negative electrode plate.

**Preparing a positive electrode plate:** Dissolving lithium cobalt oxide as a positive active material, conductive carbon black as a conductive agent, and polyvinylidene difluoride (PVDF) as a binder at a mass ratio of 97: 1.4: 1.6 in an N-methyl-pyrrolidone (NMP) solution to form a positive electrode slurry in which the solid content is 72 wt%. Using an 8 µm-thick aluminum foil as a positive current collector, and coating the positive current collector with the positive electrode slurry on both sides, each side being coated for a thickness of 80 µm. Performing drying, cold-pressing, and slitting to obtain a positive electrode plate.

**Preparing a separator:** Using 7 µm-thick polyethylene (PE) porous polymer film as a separator.

**Preparing an electrolyte solution:** Mixing ethylene carbonate (EC), ethyl methyl carbonate (EMC), and diethyl carbonate (DEC) at a mass ratio of EC: EMC: DEC = 30: 50: 20 in a dry environment in which the water content is less than 10 ppm. Stirring well, and then adding LiPF₆ as a lithium salt. Dissolving the lithium salt, stirring thoroughly, and then adding propyl propionate and ethyl propionate. Subsequently, adding 1,3-propane sultone and fluoroethylene carbonate. Stirring well to obtain an electrolyte solution in which the content of LiPF₆ is 12.5%, the content of the ethyl propionate is 12%, the content of propyl propionate is 36%, the content of 1,3-propane sultone is 2%, and the content of the fluoroethylene carbonate is 2.5%, based on the total mass of the electrolyte solution.

**Preparing a lithium-ion battery:** Stacking the positive electrode plate, the separator, and the negative electrode plate sequentially in such a way that the separator is located between the positive electrode plate and the negative electrode plate to serve a function of separation, and winding the stacked structure to obtain an electrode assembly. Putting the electrode assembly in an aluminum plastic film that serves as an outer package. Dehydrating the electrode assembly at 80 °C, injecting the electrolyte solution, and performing packaging. Performing steps such as chemical formation, degassing, and shaping to obtain a lithium-ion battery.

Embodiments 1-2 to 1-4 differ from Embodiment 1-1 in the mass percent w of the hard carbon in the negative active material, and the rest is the same as that in Embodiment 1-1. Embodiments 1-5 to 1-9 differ from Embodiment 1-1 in the mass percent v of the propyl propionate and/or the ethyl propionate in the electrolyte solution and the mass percent w of the hard carbon in the negative active material, and the rest is the same as that in Embodiment 1-1. Comparative Embodiments 1-1 to 1-3 differ from Embodiment 1-1 in the mass percent w of the hard carbon in the negative active material and/or the mass percent v of the propyl propionate and/or the ethyl propionate in the electrolyte solution, and the rest is the same as that in Embodiment 1-1, as detailed in Table 1.

Embodiments 2-1 to 2-4 and Embodiment 2-7 differ from Embodiment 1-6 in the ratio n of the mass percent of hydrogen to the mass percent of carbon in the hard carbon, and the rest is the same as that in Embodiment 1-6. Embodiments 2-5 and 2-6 differ from Embodiment 1-6 in the OI value of the natural graphite, and the rest is the same as that in Embodiment 1-6, as detailed in Table 2.

Embodiments 3-1 and 3-2 differ from Embodiment 1-6 in the compacted density of the negative electrode plate, and resultingly, in the porosity of the negative electrode plate. The compacted density of the negative electrode plate in Embodiment 3-1 is 1.75 g/cm³, and the compacted density of the negative electrode plate in Embodiment 3-2 is 1.73 g/cm³. Embodiments 3-3, 3-4, and 3-5 differ from Embodiment 1-6 in the mass percent w of the hard carbon in the negative active material and the compacted density of the negative electrode plate, and the rest is the same as that in Embodiment 1-6. The compacted density of the negative electrode plate in Embodiment 3-3 is 1.70 g/cm³, the compacted density of the negative electrode plate in Embodiment 3-4 is 1.68 g/cm³, and the compacted density of the negative electrode plate in Embodiment 3-5 is 1.62 g/cm³. The mass percent w in Embodiments 3-3, 3-4, and 3-5 is 6%, as detailed in Table 3.

In addition, in this application, the corresponding parameters are measured by using the following methods.

Discharging a lithium-ion battery at 1C constant current until the voltage reaches 3.0V and disassembling the lithium-ion battery, taking out a negative electrode, soaking the negative electrode in dimethyl carbonate (DMC) for 20 minutes, and then rinsing the negative electrode with the DMC and acetone successively. Subsequently, baking the negative electrode in an oven at 80 °C for 12 hours to obtain a treated negative electrode plate. Scraping off the powder from the negative electrode plate by using a scraper, and heat-treating the scraped powder in a tube furnace at 400 °C for 4 hours in an argon atmosphere to obtain a negative active material. Subjecting the obtained negative active material, negative active material layer, and negative electrode plate to the following tests:

### 1. Testing the OI value

The OI value of the powder of the negative active material and the OI value of the negative electrode plate may be determined by using an X-ray powder diffractometer. An X-ray diffraction pattern is obtained in accordance with the *General Rules for X-Ray Diffractometry* and the method for determining lattice parameters of graphite specified in JIS K0131-1996 and JB/T4220-2011. The calculation formula is: OI value = C₀₀₄/C₁₁₀, where C₀₀₄ represents a peak area of the 004 characteristic diffraction peak, and C₁₁₀ represents a peak area of the 110 characteristic diffraction peak. A specific method for determining the OI value of the powder of the negative active material is: Putting the negative active material powder into an X-ray powder diffractometer, performing X-ray analysis to obtain the peak area of the 004 crystal plane diffraction peak and the peak area of the 110 crystal plane diffraction peak, and then calculating the OI value of the powder of the negative active material particles. A specific method for determining the OI value of the negative electrode plate is: Putting the negative electrode plate into an X-ray powder diffractometer directly, performing X-ray analysis to obtain the peak area of the 004 crystal plane diffraction peak and the peak area of the 110 crystal plane diffraction peak, and then calculating the OI value of the negative electrode plate.

### 2. Determining the particle size of the hard carbon material particles

Determining the particle size of the hard carbon material particles by using a Malvern particle size analyzer: Dispersing the hard carbon material in an ethanol dispersant, sonicating the mixture for 30 minutes to make a specimen, and adding the specimen into the Malvern particle size analyzer to determine Dᵥ₅₀ of the hard carbon material particles.

### 3. Testing the mass percent of the hard carbon material

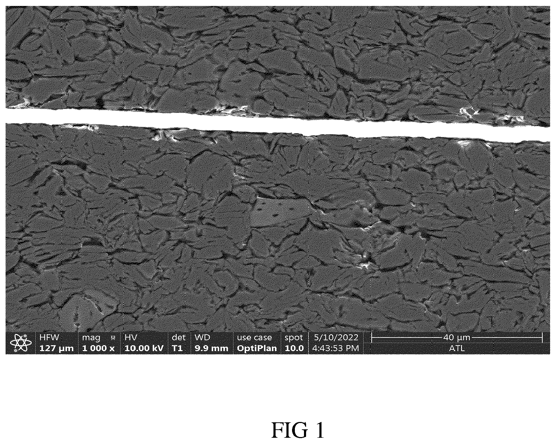

As shown in the Figure, in a backscatter diffraction mode of SEM, the contrast and morphology exhibited by the graphite particles are significantly different from those exhibited by the hard carbon particles in the negative electrode plate. The conductivity of hard carbon is lower than that of graphite, and therefore, the graphite particles appear dark-grey in the SEM image, and the hard carbon particles appear bright-grey in the SEM image. The hard carbon particles assume obvious edges and corners, and some hard carbon particles include large pores. The boundaries of the graphite particles are relatively rounded. Photographing and observing the cross-section of the negative electrode plate along the thickness direction of the electrode plate by using a scanning electron microscope (SEM), setting the shooting magnification to 1000×, and setting the shooting area to 125 µm × 85 µm. Subsequently, and then calculating the area of the graphite particles and the area of the hard carbon particles separately by using the image analysis software Image J. Calculating the area ratio by dividing the area of the hard carbon particles by the area of the graphite particles. Obtaining the area ratios of 50 SEM images by performing the above analysis steps, determining the arithmetic average of the 50 area ratios, and using the arithmetic average as the mass percent of the hard carbon material.

### 4. Testing the compacted density of the negative electrode plate

Cutting out 20 small discs with a radius of 15 mm from a negative electrode plate by using a cutting machine. Weighing the small discs to obtain a mass of each small disc. Subtracting the mass of the current collector copper foil with the same radius as the small disc to obtain the mass M of the negative active material layer in the small disc. Measuring the thickness D of the negative active material layer in each small disc by using a ten-thousandth micrometer, and determining the area S of the small disc. Calculating the compacted density of the negative active material layer in each small disc as: compacted density = M/S/D. Averaging out the compacted density values of the measured specimens, and using the average as the compacted density of the negative electrode plate.

### 5. Testing the volume resistivity of the negative active material powder

Measuring the volume resistivity of the negative active material powder under a 20 MPa pressure by a four-point probe method. Adding the negative active material powder into a specimen platform. Applying a 20 MPa pressure onto the powder by using mechanical press. Waiting until the pressure stabilizes, and reading the volume resistivity ρ1 of the positive active material powder under a 20 MPa pressure by using a resistivity meter.

### 6. Testing the volume resistivity of the negative electrode plate

Measuring the resistance of a negative electrode plate by using a Hioki BT3562 internal resistance tester. Cutting out a 2.5 cm × 2.5 cm specimen from the negative electrode plate, gripping the specimen between two conductive terminals of the internal resistance tester, and applying a preset pressure to fix the specimen. Measuring the resistance R of the electrode plate specimen under the following test conditions: the diameter of the conductive terminals is 14 mm, the applied pressure is 15 MPa to 27 MPa, and the sampling time window is 5 s to 17 s. Subsequently, calculating the volume resistivity of the negative electrode plate as: ρ2 = R·λ/1, where λ is the detection area and, in this test, is equal to the area of the conductive terminal, and 1 is the thickness of the electrode plate.

### 7. Testing the porosity of the negative electrode plate

Cutting the negative electrode plate into a small cuboid specimens of 10 mm × 10 mm in size, and weighing the specimen to obtain a mass of the specimen. Subsequently, placing the specimen into a true density tester (AccuPyc II1340), shutting down the test system, and passing an appropriate amount of nitrogen in. Detecting the gas pressure in the specimen chamber and the expansion chamber, and calculating the true volume V₂ according to the Bohr's law (PV = nRT). Calculating the apparent volume as: V₁ = S × H (S is the surface area of the specimen, H is the thickness of the specimen), and then calculating the porosity K as: K = (V₁ - V₂)/V₁ × 100%.

### 8. Testing the number of cycles

Taking lithium-ion batteries in each embodiment and comparative embodiment, and charging the battery at a constant current of 1C in a 0 °C environment until the voltage reaches 4.48 V, and then charging the battery at a constant voltage until the current drops to 0.05C. Subsequently, discharging the battery at a constant current of 1C until the voltage reaches 3 V, thereby completing one cycle. Repeating the above steps for 1000 cycles. Recording the capacity retention rate of the lithium-ion battery at the end of each cycle. Terminating the cycling when the capacity of the lithium-ion battery at the end of a cycle is less than 80% of the initial cycle capacity. Recording the final number of cycles to characterize the cycle performance. The final number of cycles is the number of cycles when the discharge capacity retention rate drops to 80% after cycling at 0 °C. Testing 5 specimens for each embodiment or comparative embodiment, and averaging out the values.

### 9. Testing the discharge capacity retention rate

Taking lithium-ion batteries in each embodiment and comparative embodiment, and charging the battery at a constant current of 0.5C in a 25 °C environment until the voltage reaches 4.48 V, and then charging the battery at a constant voltage until the current drops to 0.05C. Subsequently, discharging the battery at a constant current of 0.5C until the voltage reaches 3 V, thereby completing one cycle. Repeating the above steps for 5 cycles. Recording the discharge capacity at the end of each cycle, and calculating the average value C₁ of the discharge capacities of the 5 cycles. Subsequently, charging the battery at a constant current of 0.5C until the voltage reaches 4.48 V, and then charging the battery at a constant voltage until the current reaches 0.05C. Afterward, discharging the battery at a constant current of 5C until the voltage drops to 3 V. Repeating the above steps for 5 cycles, recording the discharge capacity at the end of each cycle, and calculating the average value C₂ of the discharge capacities of the 5 cycles. Dividing C₂ by C₁ to obtain the discharge capacity retention rate of the battery cycled at 25 °C and at a current of 5C.

Taking lithium-ion batteries in each embodiment and comparative embodiment, and charging the battery at a constant current of 0.5C in a 25 °C environment until the voltage reaches 4.48 V, and then charging the battery at a constant voltage until the current drops to 0.05C. Subsequently, discharging the battery at a constant current of 1C until the voltage reaches 3 V, thereby completing one cycle. Repeating the above steps for 5 cycles. Recording the discharge capacity at the end of each cycle, and calculating the average value C₃ of the discharge capacities of the 5 cycles. Subsequently, placing the battery in a -20 °C environment, and charging the battery at a constant current of 0.5C until the voltage reaches 4.48 V, and then charging the battery at a constant voltage until the current reaches 0.05C. Afterward, discharging the battery at a constant current of 1C until the voltage drops to 3 V. Repeating the above steps for 5 cycles, recording the discharge capacity at the end of each cycle, and calculating the average value C₄ of the discharge capacities of the 5 cycles. Dividing C₄ by C₃ to obtain the discharge capacity retention rate of the battery cycled at -20 °C and at a current of 1C.

### 10. Testing the volumetric energy density (VED)

Charging and discharging a lithium-ion battery at a rate of 0.2 C under 25 °C to obtain a 0.2 C discharge capacity and discharge energy. Dividing the discharge energy by the discharge capacity to obtain an average discharge voltage. Measuring the length, width, and height of the lithium-ion battery to obtain the volume of the battery. Calculating the volumetric energy density VED of the lithium-ion battery as: VED = discharge capacity × voltage/volume. Testing the lithium-ion batteries in groups, each group containing 5 batteries. Averaging out the measured values.

Table 1 shows parameters and evaluation results of Embodiments 1-1 to 1-9 and Comparative Embodiments 1-1 to 1-3.

**Table 1 (To be continued)**

| | v/w | w | V | OI value of negative electrode plate |
|---|---|---|---|---|
| Embodiment 1-1 | 15.5 | 3.1% | 48% (Propyl propionate 36%, ethyl propionate 12%) | 26.09 |
| Embodiment 1-2 | 9.2 | 5.2% | 48% (Propyl propionate 36%, ethyl propionate 12%) | 25.51 |
| Embodiment 1-3 | 7.0 | 6.9% | 48% (Propyl propionate 36%, ethyl propionate 12%) | 24.52 |
| Embodiment 1-4 | 5.3 | 9.1% | 48% (Propyl propionate 36%, ethyl propionate 12%) | 23.72 |
| Embodiment 1-5 | 5.0 | 10% | 50% (Propyl propionate 12%, ethyl propionate 38%) | 22.12 |
| Embodiment 1-6 | 21.0 | 3.1% | 65% (Propyl propionate 15%, ethyl propionate 50%) | 26.09 |
| Embodiment 1-7 | 13.5 | 3.1% | 42% (Propyl propionate 10%, ethyl propionate 32%) | 26.09 |
| Embodiment 1-8 | 8.4 | 3.1% | 26% (Ethyl propionate) | 26.09 |
| Embodiment 1-9 | 7.1 | 1.4% | 10% (Propyl propionate) | 25.50 |
| Comparative Embodiment 1-1 | 22.7 | 1.5% | 34% (Propyl propionate 11%, ethyl propionate 23%) | 27.13 |
| Comparative Embodiment 1-2 | / | 3% | / | 26.09 |
| Comparative Embodiment 1-3 | 4.4 | 11.4% | 50% (Propyl propionate 10%, ethyl propionate 40%) | 21.04 |

**Table 1 (Continued)**

| | Resistivity of negative electrode plate | Volumetric energy density (Wh/L) | Discharge capacity retention rate tested at -20 °C and at a current of 1C | Discharge capacity retention rate tested at 25 °C and at a current of 5C | Number of cycles counted when discharge capacity retention rate tested at 0 °C drops to 80% |
|---|---|---|---|---|---|
| Embodiment 1-1 | 3.11 | 767.4 | 77.9% | 94.8% | 502 |
| Embodiment 1-2 | 2.18 | 767.0 | 77.9% | 92.5% | 443 |
| Embodiment 1-3 | 1.29 | 766.7 | 76.9% | 91.3% | 413 |
| Embodiment 1-4 | 0.88 | 765.9 | 75.2% | 90.5% | 375 |
| Embodiment 1-5 | 0.56 | 765.0 | 75.5% | 88.2% | 350 |
| Embodiment 1-6 | 1.18 | 767.0 | 76.5% | 90.1% | 395 |
| Embodiment 1-7 | 1.18 | 767.0 | 79.5% | 94.3% | 498 |
| Embodiment 1-8 | 1.20 | 767.0 | 77.6% | 94.6% | 428 |
| Embodiment 1-9 | 2.21 | 766.7 | 76.0% | 89.7% | 368 |
| Comparative Embodiment 1-1 | 7.01 | 767.8 | 74.8% | 83.1% | 312 |
| Comparative Embodiment 1-2 | 2.11 | 767.3 | 64.80% | 80.8% | 178 |
| Comparative Embodiment 1-3 | 0.31 | 707 | 72.10% | 84.10% | 263 |

As can be seen from Embodiments 1-1 to 1-9 and Comparative Embodiments 1-1 to 1-3, by making the v/w ratio to fall within the specified range, the lithium-ion battery is endowed with excellent cycle performance at the same time. An appropriate amount of isotropic hard carbon added can increase the ion diffusion coefficient and effectively reduce the internal resistance of the lithium-ion battery. The ethyl propionate and the propyl propionate are of low viscosity and are easily flowable at low temperature, thereby further accelerating transmission of Li⁺ ions. Such constituents combined with hard carbon synergistically improve the kinetics from perspectives of both the negative electrode plate and the electrolyte solution, thereby improving the low-temperature discharge performance and cycle performance of the lithium-ion battery. By contrast, in Comparative Embodiments 1-1 to 1-3, the v/w ratio falls beyond the range specified herein, and therefore, the lithium-ion battery exhibits relatively low performance in terms of energy density, low-temperature discharge capacity retention rate, and the number of cycles of the battery discharged at low temperature.

Table 2 shows parameters and evaluation results of Embodiment 1-6 and Embodiments 2-1 to 2-7.

**Table 2**

| | Ratio x of n to OI value of graphite | Ratio n of mass percent of hydrogen to mass percent of carbon in hard carbon | OI value of graphite | OI value of negative electrode plate | Discharge capacity retention rate tested at 25 °C and at a current of 5C | Number of cycles counted when discharge capacity retention rate tested at 0 °C drops to 80% |
|---|---|---|---|---|---|---|
| Embodiment 1-6 | 0.0068 | 0.0284 | 4.2 | 25.51 | 90.1% | 395 |
| Embodiment 2-1 | 0.0090 | 0.0379 | 4.2 | 24.01 | 91.2% | 422 |
| Embodiment 2-2 | 0.0133 | 0.0558 | 4.2 | 22.96 | 92.9% | 486 |
| Embodiment 2-3 | 0.0159 | 0.0668 | 4.2 | 20.89 | 94.1% | 525 |
| Embodiment 2-4 | 0.0180 | 0.0756 | 4.2 | 18.82 | 95.2% | 583 |
| Embodiment 2-5 | 0.0089 | 0.0284 | 3.2 | 17.35 | 96.1% | 632 |
| Embodiment 2-6 | 0.0124 | 0.0284 | 2.3 | 14.21 | 97.1% | 663 |
| Embodiment 2-7 | 0.0476 | 0.2000 | 4.2 | 12.79 | 86.1% | 329 |

When the ratio n of the mass percent of hydrogen to the mass percent of carbon in the hard carbon is relatively low, the fewer graphite crystallites in the hard carbon, the higher its isotropy of the hard carbon. By controlling the ratio x of n to the OI value of graphite to fall within the specified range, this application further improves the electrochemical performance of the lithium-ion battery. As can be seen from Embodiment 1-6 and Embodiments 2-1 to 2-4, when x falls within the specified range, the discharge capacity retention rate of the lithium-ion battery and the number of cycles of the battery discharged at low temperature are further increased. When hard carbon is used in conjunction with graphite, the OI value of the negative electrode plate is further reduced. When the ratio x of n to the OI value of the graphite powder as well as the ratio n of the mass percent of hydrogen to the mass percent of carbon in hard carbon are relatively high, as in Embodiment 2-7, the overly high mass percent of hydrogen in the hard carbon affects the conduction of electrons, and in turn, impairs the discharge retention rate of the lithium-ion battery and the number of cycles of the lithium-ion battery discharged at low temperature.

Table 3 shows parameters and evaluation results of Embodiment 1-6 and Embodiments 3-1 to 3-5.

**Table 3**

| | w | p | p/(1-w) | Discharge capacity retention rate tested at 25 °C and at a current of 5C | Number of cycles counted when discharge capacity retention rate tested at 0 °C drops to 80% |
|---|---|---|---|---|---|
| Embodiment 1-6 | 3.1% | 26.0% | 0.27 | 90.1% | 395 |
| Embodiment 3-1 | 3.1% | 28.2% | 0.29 | 92.2% | 431 |
| Embodiment 3-2 | 3.1% | 32.0% | 0.33 | 93.9% | 463 |
| Embodiment 3-3 | 6.0% | 30.5% | 0.32 | 96.5% | 546 |
| Embodiment 3-4 | 6.0% | 29.1% | 0.31 | 97.3% | 521 |
| Embodiment 3-5 | 6.0% | 35.7% | 0.38 | 87.1% | 375 |

By controlling the porosity p of the negative electrode plate and p/(1-w) to fall within the specified ranges, this application achieves a balance between the porosity of the negative electrode plate and the mass percent of the hard carbon so as not to impair the transmission of lithium ions. As can be seen from Embodiment 1-6 and Embodiments 3-1 to 3-5, the added hard carbon leads to change in the porosity of the negative electrode plate. When 0.26 ≤ p/(1-w) ≤ 0.35, the discharge capacity retention rate of the lithium-ion battery and the number of cycles of the battery discharged at low temperature are increased. When 25% ≤ p ≤ 35%, the discharge capacity retention rate of the lithium-ion battery and the number of cycles of the battery discharged at low temperature are relatively high.

What is described above is merely exemplary embodiments of this application and the technical principles thereof. A person skilled in the art understands that the scope of disclosure in this application is not limited to the technical solutions formed by a specific combination of the foregoing technical features, but covers other technical solutions formed by arbitrarily combining the foregoing technical features or equivalents thereof, for example, a technical solution formed by replacing any of the foregoing features with a technical feature disclosed herein and serving similar functions.

## Claims

1. An electrochemical device, comprising:
a negative electrode plate and an electrolyte solution; the negative electrode plate comprising a negative current collector and a negative active material layer; and the negative active material layer is located on the negative current collector;
wherein the negative active material layer comprises a negative active material, the negative active material comprises hard carbon and graphite, and a mass percent of the hard carbon in the negative active material is w; and
the electrolyte solution comprises at least one of ethyl propionate or propyl propionate, a mass percent of the at least one of ethyl propionate or propyl propionate in the electrolyte solution is v, and 5 ≤v/w ≤ 21.

2. The electrochemical device according to claim 1, wherein 8 ≤ v/w ≤ 15.

3. The electrochemical device according to claim 1 or 2, wherein 1% ≤ w ≤ 10%.

4. The electrochemical device according to any one of claims 1 to 3, wherein 10% ≤ v ≤ 70%.

5. The electrochemical device according to any one of claims 1 to 4, wherein a ratio of a mass percent of hydrogen in the hard carbon to a mass percent of carbon in the hard carbon is n, a ratio of n to an orientation index OI value of the graphite is x, and 0.0025 ≤ x ≤ 0.04.

6. The electrochemical device according to claim 5, wherein 0.02 ≤ n ≤ 0.08.

7. The electrochemical device according to any one of claims 1 to 6, wherein an OI value of the graphite is 1 to 7.

8. The electrochemical device according to any one of claims 1 to 7, wherein a porosity of the negative electrode plate is p, and 0.26 ≤ p/(1 - w) ≤ 0.35.

9. The electrochemical device according to claim 8, wherein 25% ≤ p ≤ 35%.

10. The electrochemical device according to any one of claims 1 to 9, wherein a specific surface area of the graphite is 0.1 m²/g to 6 m²/g, and Dᵥ₅₀ of particles of the graphite is 5 µm to 20 µm.

11. The electrochemical device according to any one of claims 1 to 10, wherein a specific surface area of the hard carbon is 2 m²/g to 15 m²/g, and Dᵥ₅₀ of particles of the hard carbon is 1.8 µm to 11.6 µm.

12. The electrochemical device according to any one of claims 1 to 11, wherein a compacted density of the negative electrode plate is 1.65 g/cm³ to 1.80 g/cm³.

13. The electrochemical device according to any one of claims 1 to 12, wherein an OI value of the negative electrode plate is 10 to 30.

14. The electrochemical device according to any one of claims 1 to 13, wherein the graphite comprises at least one of natural graphite or artificial graphite.

15. An electronic device, comprising the electrochemical device according to any one of claims 1 to 14.
